# EUROPÄISCHE PATENTSCHRIFT

(11) **EP 2 644 503 B1**
(45) Veröffentlichungstag und Bekanntmachung des Hinweises auf die Patenterteilung: **21.02.2018**
(21) Anmeldenummer: 13001496.2
(22) Anmeldetag: 22.03.2013
(51) Int. Cl.: B64D 11/06

(54) **Fluggastsitz**
aircraft passenger seat
Siège de passager d'aéronef

(30) Priorität: 26.03.2012 DE 202012003007 U
(43) Veröffentlichungstag der Anmeldung: 02.10.2013
(73) Patentinhaber: ZIM Flugsitz GmbH, 88677 Markdorf (DE)
(72) Erfinder: Salzer, Uwe, 88048 Friedrichshafen (DE)
(74) Vertreter: Otten, Roth, Dobler & Partner mbB Patentanwälte

(56) Entgegenhaltungen:
- WO-A1-02/24527
- GB-A- 2 460 472
- US-A1- 2005 062 324
- US-A1- 2005 110 319

## Beschreibung

Die Erfindung betrifft einen Fluggastsitz nach dem Oberbegriff des Anspruchs 1. Ein gattungsgemäßer Sitz ist aus der GB 2 460 472 A bekannt. Zur Ausstattung von Passagierflugzeugen, insbesondere von Langstreckenflugzeugen sind Fluggastsitze mit einem oder mehreren Sitzplätzen in einer Vielzahl von Ausführungen bekannt. Ein Sitzplatz weist einen Sitzboden und zumeist auch eine Rückenlehne auf, wobei an einem Sitzplatz eines Fluggastsitzes nahezu immer verschiedene Sitzpositionen durch Lageänderungen des Sitzbodens, der Rückenlehne und häufig beider Teile einstellbar sind. Dadurch können Passagiere zwischen aktiveren Sitzhaltungen z. B. für einen Verzehr von Mahlzeiten und passiveren Sitzhaltungen zum Entspannen und Schlafen nach Belieben wechseln. Insbesondere sind verschiedene Lösungen bekannt, Bewegungen des Sitzbodens und der Rückenlehne mechanisch miteinander zu koppeln. Dadurch lassen sich Sitzeinstellungen vorgeben, die beispielsweise den Bewegungsraum benachbarter Fluggäste, insbesondere in einer dahinter angeordneten Sitzreihe, möglichst wenig beeinträchtigen.
Aufgrund der Anforderung im Luftverkehr, Sitzeinrichtungen möglichst leicht auszuführen, stellt die Konstruktion von bequem einstellbaren und zugleich stabilen Fluggastsitzen eine besondere Herausforderung dar.

Aufgabe der vorliegenden Erfindung ist es einen einstellbaren Fluggastsitz mit vergleichsweise stabilem und einfachem Aufbau bereitzustellen.
Diese Aufgabe wird durch einen Fluggastsitz mit den Merkmalen des Anspruchs 1 gelöst.
Bevorzugte und vorteilhafte Ausführungen der Erfindung sind in den Unteransprüchen aufgeführt.
Die Erfindung geht von einem Fluggastsitz aus, der ein Gestell, einen am Gestell bewegbar gelagerten Sitzboden sowie eine in Bezug auf das Gestell bewegbar gelagerte Rückenlehne umfasst. Das Gestell ist vorzugsweise zur Befestigung am Boden einer Fluggastkabine vorgesehen.
Die Rückenlehne ist in einem Bereich ihrer Oberkante an einem in Bezug auf das Gestell ortsfesten Drehpunkt, insbesondere einer ortsfesten Drehachse, gelagert. Das Bezugssystem für eine ortsfeste Lage des Drehpunktes ist vorzugsweise der Flugzeugrumpf und insbesondere die Fluggastkabine. Insbesondere ist der Drehpunkt ortsfest bezüglich eines z.B. Kabinenbodens oder auch einer z.B. Kabinenwand, an dem ein Teil des Fluggastsitzes befestigt sein kann.
Der Bereich kann sich bis z.B. 5 cm, z.B. 10 cm, z.B. 15 cm, z.B. 20 cm, z.B. 25 cm, z.B. 30 cm, z.B. 35 cm unterhalb der Oberkante der Rückenlehne erstrecken. Die Rückenlehne reicht mit ihrer Oberkante an einer sitzenden Person vorzugsweise bis mindestens zu den Schulterblättern, insbesondere bis mindestens zu den Schultern und besonders bevorzugt bis mindestens zum oberen Kopfende. Des Weiteren kann sich der ortsfeste Drehpunkt oberhalb der Oberkante der Rückenlehne befinden, die beispielsweise mit einem am Drehpunkt gelagerten Verbindungselement fest verbunden ist.

Der Vorteil der Erfindung besteht darin, dass durch eine Lagerung der Rückenlehne im Bereich ihrer Oberkante eine günstigere Kräfteverteilung erreichbar ist. Je stärker sich ein Fluggast an die Rückenlehne anlehnt, desto höher kann ein mittlerer Angriffspunkt von Kräften liegen, die auf die Rückenlehne wirken. Mit einem ortsfesten Drehpunkt im Bereich der Oberkante ist die Rückenlehne derart gelagert, dass sich ein mittlerer Angriffspunkt einwirkender Kräfte bei zunehmender Belastung durch einen Fluggast zu einer Lagerung am Drehpunkt hinverschieben kann. Durch eine Lagerung an einem Drehpunkt ist zudem erreichbar, dass kraftaufnehmende Teile an der Lagerstelle durch vorwiegend in eine Richtung wirkende Kräfte belastet sind. Eine Übertragung von Drehmomenten ist durch Lagerung an einem Drehpunkt verringerbar oder sogar vermeidbar. Ein Drehlager am ortsfesten Drehpunkt für die Rückenlehne im Bereich der Oberkante weist vorzugsweise eine horizontale und insbesondere parallel zur Oberkante verlaufende Drehachse auf, wodurch die Rückenlehne, insbesondere deren Unterkante, parallel zur Sitzrichtung schwenkbar und deren Neigung verstellbar ist.

Die Lagerung in einem Drehpunkt, insbesondere einer Drehachse, nahe der Oberkante bietet zusätzlich den Vorteil, dass beispielsweise die Rückenlehne zur Aufnahme und Dämpfung z.B. dynamischer, insbesondere vorwiegend horizontal wirkender Kräfte auslegt sein kann, während eine tragende Struktur, z.B. ein Stützgestänge, einer Drehlagerung der Rückenlehne für eine vorwiegend statische Kraftaufnahme, insbesondere zum Boden gerichteter Kräfte, optimiert sein kann. Dadurch sind verschiedene Funktionen zur Aufnahme von Kräften auf die Rückenlehne und z.B. das Gestell aufteilbar und durch z.B. ein Drehlager in vorgegebener Weise kombinierbar. Ein Drehlager zur Lagerung der Rückenlehne an einem ortsfesten Drehpunkt kann beispielsweise an einer mittleren Stelle der Oberkante angeordnet sein. Für eine derartige Lagerung können auch zwei oder mehr Schwenklager, die z.B. auf eine linke und eine rechte Seite der Rückenlehne verteilt sind, im Bereich der Oberkante vorgesehen sein.

Bei einer Lagerung des Lagerelements an einem ortsfesten Schwenklager weist das Viergelenk wegen der ebenfalls ortsfesten Lagerung im Bereich der Oberkante der Rückenlehne zwei feste und zwei bewegliche Lagerstellen auf. Hieraus ergibt sich ein erfindungsgemäßer Fluggastsitz mit einem vergleichsweise einfachen Aufbau, der sich mit vorteilhaft geringem Aufwand an unterschiedliche Einbaubedingungen anpassen lässt.

Damit ein Fluggast eine gewünschte Sitzposition feststellen kann, sind vorzugsweise Arretiermittel für die Rückenlehne und/oder den Sitzboden vorgesehen.

Vorzugsweise erstreckt sich das Gestell bis in den Bereich der Oberkante der Rückenlehne, wobei die Rückenlehne im Bereich der Oberkante schwenkbar am Gestell gelagert ist. Dies bietet den Vorteil, dass beispielsweise das Gestell zum Tragen statischer Lasten ausgebildet sein kann, während die Rückenlehne zum Dämpfen dynamischer Lasten oder Belastungen optimiert sein kann. Gegebenenfalls ist das Gestell derart anpassbar, dass sich der ortsfeste Drehpunkt auch durch ein Drehlager, das an einer z.B. Kabinenwand angebracht ist, bereitstellen lässt.

Ein wesentlicher Aspekt sind Kopplungsmittel zur Kopplung von Bewegungen des Sitzbodens und der Rückenlehne vorgesehen. Dadurch sind Positionen des Sitzbodens vorteilhaft an verschiedene Neigungswinkel der Rückenlehne anpassbar. Zudem sind Arretierungsmittel am Sitzboden oder an der Rückenlehne durch eine Kopplung der Bewegungen der Rückenlehne und des Sitzbodens vorteilhaft auf beide gleichzeitig wirksam.

Die Kopplungsmittel können ein Drehgelenk umfassen, das den Sitzboden mit der Rückenlehne verbindet. Beispielsweise kann das Drehgelenk an einer rückseitigen Kante des Sitzbodens angebracht sein und den Sitzboden mit z.B. einer Unterkante der Rückenlehne drehbeweglich verbinden. Durch Bewegungen des Sitzbodens ist dabei die Unterkante der Rückenlehne gegenüber dem ortsfesten Drehpunkt im Bereich der Oberkante bewegbar, wodurch die Neigung der Rückenlehne veränderbar ist.

Der Sitzboden kann schwenkbar mit einem Lagerelement verbunden sein. Der Sitzboden kann z.B. an seiner Vorderkante im Bereich der Kniekehlen einer sitzenden Person für eine Einstellbarkeit der Sitzneigung schwenkbar an einem Lagerelement angebracht sein. Insbesondere kann das Lagerelement seinerseits am Gestell oder auch am Boden schwenkbar gelagert sein. Es ist wesentlich, dass eine Lagerung des Sitzbodens und der Rückenlehne gemeinsam ein Viergelenk bilden.

Nachfolgend werden mehrere Ausführungsbeispiele der Erfindung anhand der Zeichnungen beschrieben und weitere Vorteile genannt. Es zeigen:
- Figur 1: eine schematische Seitenansicht eines erfindungsgemäßen Fluggastsitzes und
- Figur 2: eine schematische Seitenansicht eines weiteren Fluggastsitzes.

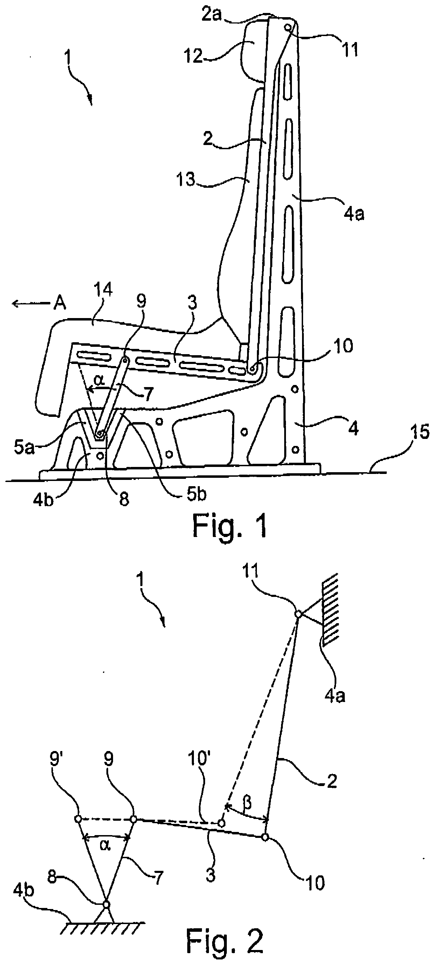

Die Figuren 1 und 2 zeigen einen erfindungsgemäßen Fluggastsitz 1, der mit einem Sitzgestell 4 an einem Kabinenboden 15 befestigt ist. Ein Sitzboden 3 ist mit einem Sitzpolster 14 versehen und bildet mit diesem gemeinsam eine Sitzfläche des Fluggastsitzes 1.

Eine Rückenlehne 2 des Fluggastsitzes 1 ist mit einem Polster 13 im Rückenbereich und einem Polster 12 im Kopfbereich von Fluggästen (nicht gezeigt) ausgestattet. An der Oberkante 2a der Rückenlehne 2 ist diese, vorzugsweise links- und rechtsseitig, mit einem Drehlager 11 an einem Abschnitt 4a des Sitzgestells 4, der an die Oberkante 2a heranreicht, gelagert.

An einem unteren Ende der Rückenlehne 2 ist ein weiteres Drehgelenk 10 dazu vorgesehen, die Rückenlehne 2 mit dem Sitzboden 3 beweglich zu verbinden. Der Sitzboden 3 ist im Bereich nahe seiner Vorderkante, vorzugsweise links- und rechtsseitig, durch ein Drehgelenk 9 mit einer Koppelstütze 7 verbunden. Diese ist ihrerseits über ein Drehlager 8 schwenkbar in einem Abschnitt 4b des Sitzgestells 4 gelagert und an einem Anschlag 5b angeschlagen. Durch eine Bewegung des Sitzbodens 3 in eine Richtung A ist die Koppelstütze 7 um einen Winkel α nach vorne schwenkbar, wobei ein zweiter Anschlag 5a Auslenkungen der Koppelstütze 7 nach vorne begrenzt. Vorzugsweise weist der Fluggastsitz 1 Arretiereinrichtungen (nicht gezeigt) für Sitzpositionen zwischen denjenigen auf, die durch die Anschläge 5a, 5b definiert sind. Abhängig von der Bewegung des Sitzbodens 3 in Richtung A bzw. der Schwenkbewegung der Koppelstütze 7 um den Winkel α verschwenkt die Rückenlehne 2 um das Drehlager 11, was in Figur 2 durch den Winkel β beschrieben ist, wobei der Winkel β sich für die Rückenlehne 2 in den beiden gemäß Figur 2 angedeuteten Verstellpositionen des Fluggastsitzes 1 ergibt.

Als Arretiereinrichtungen können z.B. Rast- oder z.B. Schraubklemmeinrichtungen oder z.B. pneumatische Kontrolleinheiten sowie beliebige Kombinationen aus zwei und mehr der genannten oder auch weiterer Arretierungssysteme vorgesehen sein.

Im Bereich einer Hinterkante des Sitzbodens 3 ist dieser mit einer Unterkante der Rückenlehne 2 durch das, vorzugsweise je ein links- und ein rechtsseitiges, Drehgelenk 10 verbunden, wodurch Bewegungen des Sitzbodens 3 und der Unterkante der Rückenlehne 2 direkt aneinander gekoppelt sind. Weil das Drehlager 11 für die Oberkante 2a der Rückenlehne 2 ortsfest am Sitzgestell 4 befestigt ist, kann durch das bewegbare Drehgelenk 10 die Rückenlehne 2 in ihrer Neigung durch Bewegung des Sitzbodens verstellt werden.

Die Rückenlehne 2, der Sitzboden 3 und die Koppelstütze 7 bilden zusammen mit den Drehlagern 8 und 11 sowie mit den Drehgelenken 9 und 10 ein Viergelenk. Die Drehlager 8 und 11 sind durch das Sitzgestell 4 miteinander und mit dem Kabinenboden 15 fest verbunden und bilden daher zwei Festlager in der Anordnung des Viergelenks. Die Drehgelenke 9 und 10 sind die Bewegtlager der Anordnung, die z.B. versetzte Positionen 9' und 10' - wie in Figur 2 gezeigt - einnehmen können.

Durch die Kopplung in Form eines Viergelenks lassen sich Neigungen der Rückenlehne 2 durch ein Vorschieben des Sitzbodens 3 in Richtung A verringern und durch ein Zurückschieben entgegen der Richtung A erhöhen. Wegen des vergleichsweise einfachen Aufbaus als Viergelenk ist der Fluggastsitz 1 vorteilhaft mit geringem Gewicht und in anpassbarer Bauweise herstellbar. Dabei sind verschiedene Kopplungen der Neigungen des Sitzbodens 3 an Neigungen der Rückenlehne 2 zueinander einstellbar.

In einer nicht gezeigten Ausführung eines erfindungsgemäßen Fluggastsitzes kann ein Koppelgetriebe für eine Übersetzung von horizontalen Bewegungen des Sitzbodens auf die Rückenlehne vorgesehen sein, wobei vorzugsweise z.B. pneumatische kraftverstärkende Elemente zur Unterstützung von Verschiebungen und Positionierungen des Sitzbodens vorgesehen sind.

### Bezugszeichenliste:

- 1: Fluggastsitz
- 2: Rückenlehne
- 2a: Oberkante
- 3: Sitzboden
- 4: Sitzgestell
- 4a: Abschnitt
- 4b: Abschnitt
- 5a: Anschlag
- 5b: Anschlag
- 7: Koppelstütze
- 8: Drehlager
- 9, 9': Drehgelenk
- 10, 10': Drehgelenk
- 11: Drehlager
- 12: Polster
- 13: Polster
- 14: Sitzpolster
- 15: Kabinenboden

## Patentansprüche

1. Fluggastsitz (1) mit einem Gestell (4) das zur Befestigung an einem Boden (15) einer Fluggastkabine vorgesehen ist, mit einem am Gestell (4) bewegbar gelagerten Sitzboden (3) sowie mit einer bewegbar gelagerten Rückenlehne (2), wobei die Rückenlehne (2) in einem Bereich ihrer Oberkante (2a) an einem in Bezug auf das Gestell (4) ortsfesten Drehpunkt gelagert ist, **dadurch gekennzeichnet, dass** die Lagerung des Sitzbodens (3) und der Rückenlehne (2) gemeinsam ein Viergelenk mit zwei festen und zwei beweglichen Drehpunkten bildet und dass Kopplungsmittel (10) zur Kopplung von Bewegungen des Sitzbodens (3) und der Rückenlehne (2) vorgesehen sind, die einen der beweglichen Drehpunkte darstellen.

2. Fluggastsitz (1) nach Anspruch 1, **dadurch gekennzeichnet, dass** sich das Gestell (4) bis in den Bereich der Oberkante (2a) der Rückenlehne (2) erstreckt, wobei die Rückenlehne (2) im Bereich (2a) der Oberkante schwenkbar am Gestell (4) gelagert ist.

3. Fluggastsitz (1) nach einem der vorgenannten Ansprüche, **dadurch gekennzeichnet, dass** die Rückenlehne (2) oberhalb ihrer Oberkante (2a) an einem ortsfesten Drehpunkt gelagert ist.

4. Fluggastsitz (1) nach einem der vorgenannten Ansprüche, **dadurch gekennzeichnet, dass** der Sitzboden (3) schwenkbar mit einem Lagerelement (7) verbunden ist.

5. Fluggastsitz (1) nach einem der vorgenannten Ansprüche, **dadurch gekennzeichnet, dass** das Lagerelement (7) seinerseits schwenkbar am Gestell (4) oder am Boden (15) gelagert ist.

6. Fluggastsitz (1) nach einem der vorgenannten Ansprüche, **dadurch gekennzeichnet, dass** der Sitzboden (3) mit einem Drehgelenk (10) mit der Rückenlehne (2) verbunden ist.

## Claims

1. Aircraft passenger seat (1) comprising a frame (4) which is provided for securing to a floor (15) of an aircraft passenger cabin, comprising a base of the seat (3) mounted movably on the frame (4) and a movably mounted back rest (2), wherein the back rest (2) is mounted on a fixed pivot point relative to the frame (4) in the region of its upper edge (2a), characterised that the bearing of the base of the seat (3) and the back rest (2) together form a four-pivot frame with two fixed and two movable pivot points and in that coupling means (10) are provided for coupling movements of the base of the seat (3) and the backrest (2) which represent one of the movable pivot points.

2. Aircraft passenger seat (1) according to claim 1, **characterised in that** the frame (4) extends into the area of the upper edge (2a) of the back rest (2), wherein the back rest (2) is mounted to be pivotable on the frame (4) in the area (2a) of the upper edge.

3. Aircraft passenger seat (1) according to any of the preceding claims, **characterised in that** the back rest (2) is mounted above its upper edge (2a) on a fixed pivot point.

4. Aircraft passenger seat (1) according to any of the preceding claims, **characterised in that** the base of the seat (3) is connected pivotably to a bearing element (7).

5. Aircraft passenger seat (1) according to any of the preceding claims, **characterised in that** the bearing element (7) is mounted pivotably on the frame (4) or on the floor (15).

6. Aircraft passenger seat (1) according to any of the preceding claims, **characterised in that** the base of the seat (3) is connected to the back rest (2) by a rotational joint (10).

## Revendications

1. Siège de passager (1) pour avion avec un châssis (4) pour la fixation sur un plancher (15) d'une cabine passager d'un avion, avec une assise (3) montée mobile sur le châssis (4), et avec un dossier (2) monté de façon mobile, le dossier (2), dans une zone de son bord supérieur (2a), étant monté sur un point de pivotement fixe par rapport au châssis (4), **caractérisé en ce que** le montage de l'assise (3) et du dossier (2) ensemble forme un quadrilatère articulé avec deux points de pivotement fixes et deux points de pivotement mobiles, et **en ce que** des moyens d'accouplement (10) sont prévus pour coupler les mouvements de l'assise (3) et du dossier (2), lesquels moyens d'accouplement forment un des points de pivotement mobiles.

2. Siège de passager (1) pour avion selon la revendication 1, **caractérisé en ce que** le châssis (4) s'étend jusqu'à la zone du bord supérieur (2a) du dossier (2), le dossier (2) étant monté pivotant sur le châssis (4) dans la zone (2a) du bord supérieur.

3. Siège de passager (1) pour avion selon l'une des revendications précédentes, **caractérisé en ce que** le dossier (2) au-dessus de son bord supérieur (2a) est monté sur un point de pivotement fixe.

4. Siège de passager (1) pour avion selon l'une des revendications précédentes, **caractérisé en ce que** l'assise (3) est reliée de façon pivotante à un élément support (7).

5. Siège de passager (1) pour avion selon l'une des revendications précédentes, **caractérisé en ce que** l'élément support (7), de son côté, est monté de façon pivotante sur le châssis (4) ou sur le plancher (15).

6. Siège de passager (1) pour avion selon l'une des revendications précédentes, **caractérisé en ce que** l'assise (3) est reliée au dossier (2) par une articulation pivotante (10).
